# EUROPÄISCHE PATENTSCHRIFT

(11) **EP 3 769 599 B1**
(45) Veröffentlichungstag und Bekanntmachung des Hinweises auf die Patenterteilung: **21.06.2023**
(21) Anmeldenummer: 20185495.7
(22) Anmeldetag: 13.07.2020
(51) Int. Cl.: A01B 69/00, G05D 1/02, A01B 67/00, A01B 79/00, A01D 75/18

(54) **VERFAHREN ZUR ERKENNUNG EINES HINDERNISSES**
METHOD FOR DETECTING AN OBSTACLE
PROCÉDÉ DE DÉTECTION D'UN OBSTACLE

(30) Priorität: 22.07.2019 DE 102019210839
(43) Veröffentlichungstag der Anmeldung: 27.01.2021
(73) Patentinhaber: Deere & Company, Moline, IL 61265 (US)
(72) Erfinder: Schott, Florian, 68163 Mannheim (DE); Schmidt, Martin, 68163 Mannheim (DE)
(74) Vertreter: Stein, Stefan

(56) Entgegenhaltungen:
- US-A1- 2010 063 672
- US-A1- 2017 131 722
- US-A1- 2018 084 708

## Beschreibung

Die Erfindung betrifft ein Verfahren zur Erkennung eines Hindernisses während eines Arbeitseinsatzes einer Traktor-Anbaugerät-Kombination.

Bei der Bearbeitung von Arbeitsfeldern, insbesondere Ackerböden, können Steine oder andere Gegenstände an der Oberfläche des Arbeitsfeldes den Arbeitseinsatz stören. Die störenden Gegenstände können das Anbaugerät und/oder den Traktor beeinträchtigen. Außerdem kann das Arbeitsergebnis unter den störenden Gegenständen leiden.

Die Schriften US 2018/084708 A1, US 2017/131722 A1 und US 2010/063672 A1 beschreiben bekannte Verfahren zur Erkennung eines Hindernisses während eines Arbeitseinsatzes einer Traktor-Anbaugerät-Kombination.

Es ist daher Aufgabe der vorliegenden Erfindung, störende Einflüsse bei dem Arbeitseinsatz einer Traktor-Anbaugerät-Kombination zu reduzieren.

Diese Aufgabe wird durch ein Verfahren mit den Merkmalen des Patentanspruchs 1 gelöst.

Weitere vorteilhafte Ausgestaltungen des erfindungsgemäßen Verfahrens gehen aus den Unteransprüchen hervor.

Die Berücksichtigung mindestens eines der vorgenannten Parameter trägt dazu bei, dass während des Arbeitseinsatzes der Traktor-Anbaugerät-Kombination Steine und andere Gegenstände rechtzeitig als Hindernisse erkannt und folglich entweder entfernt werden oder umfahren werden können. Hierdurch können etwaige Schäden am Traktor und/oder am Anbaugerät zuverlässig und effizient vermieden werden.

Durch eine entsprechende technische Ausgestaltung einer geeigneten Vorrichtung kann der Fahrer des Traktors auf Basis des mindestens einen vorgenannten Parameters rechtzeitig vor einem Hindernis gewarnt werden. Er hat dann die Möglichkeit, das Hindernis zu entfernen, bevor der Traktor und/oder das Anbaugerät darüber fahren. Dies ermöglicht eine signifikante Entlastung des Fahrers, da er einerseits beim Erkennen von Hindernissen unterstützt wird und er sich andererseits nicht um die Folgen etwaiger Schäden kümmern muss.

Vorzugsweise werden bei dem Verfahren die beiden oben genannten Parameter verwendet. Optional werden noch mindestens ein weiterer Parameter bzw. noch mindestens eine physikalische Größe verwendet. Insbesondere wird in einem Verfahrensschritt der vorgenannte Klassifizierungsparameter verwendet und in einem nachfolgenden Verfahrensschritt der vorgenannte Arbeitsparameter verwendet. Dies unterstützt eine effiziente Selektion derjenigen Objekte, die für den jeweiligen spezifischen Arbeitseinsatz tatsächlich ein Hindernis bilden, welches entfernt oder umfahren werden sollte.

Eine Klassifizierung des detektierten Objektes erfolgt, indem ein Klassifizierungsparameter eine Größe des Objektes ist. Die Größe kann beispielsweise über ein detektiertes Volumen oder einen anderen geeigneten geometrisch-physikalischen Parameter definiert sein. Dabei wird die Größe insbesondere durch eine geeignete optische Detektionseinheit (z.B. optische Sensor, Kamera) technisch einfach mit ausreichender Genauigkeit detektiert. Bei der Klassifizierung über eine Größe des detektierten Objektes sind eine oder mehrere Größenkategorien vorgesehen. Das detektierte Objekt wird dann der zutreffenden Größenkategorie zugeordnet. Die einzelnen Größenkategorien werden abhängig vom spezifischen Arbeitseinsatz und/oder Typ des Traktors und/oder Typ des Anbaugerätes als Hindernis oder Nicht-Hindernis klassifiziert bzw. definiert. Eine Steuereinheit kann dann entscheiden, ob die zutreffende Größenkategorie und somit das detektierte Objekt während des aktuellen Arbeitseinsatzes ein Hindernis darstellt.

Über eine Klassifizierung kann auch entschieden werden, ob das detektierte Objekt lediglich für das Anbaugerät oder auch bereits für den Traktor ein Hindernis darstellt.

Wie oben beispielhaft erläutert, bietet eine entsprechend definierte Klassifizierung die Möglichkeit, das Verfahren technisch einfach an unterschiedliche Arbeitseinsätze und/oder Traktoren und/oder Anbaugeräte anzupassen.

Der vorbestimmte Arbeitsparameter ist vorzugsweise eine Arbeitsbreite in Querrichtung des Traktors. Die Arbeitsbreite ist abhängig von der Breite des Traktors oder von der Breite des Anbaugerätes. Sie entspricht insbesondere einer der beiden letztgenannten Breiten. Abhängig davon, ob das detektierte Objekt innerhalb oder außerhalb der Arbeitsbreite liegt, kann dann eine geeignete Steuereinheit entscheiden, ob es sich um ein Hindernis handelt oder nicht. Die Arbeitsbreite kann beispielsweise manuell vorgegeben werden. Alternativ wird die Arbeitsbreite in Abhängigkeit traktorseitiger Einstellungen oder durch eine Erkennung des Anbaugerätes automatisch bestimmt.

Abhängig von den eingesetzten Sensormitteln wird bei der Detektion eines Objektes vorzugsweise auch ein Abstand zwischen dem detektierten Objekt und dem Traktor oder dem Anbaugerät ermittelt. Zusammen mit einer Information über die aktuelle Fahrgeschwindigkeit des Traktors lässt sich die Zeitdauer ermitteln, wann der Traktor oder das Anbaugerät das detektierte Objekt erreicht. Hierdurch kann mit dem Verfahren eine weiter verbesserte Assistenzfunktion für den Fahrer des Traktors bereitgestellt werden.

In einer bevorzugten Ausführungsform wird ein Warnsignal gesendet, wenn ein Objekt als Hindernis erkannt wird. Hierdurch wird der Fahrer auf geeignete Weise gewarnt. Dies kann akustisch (z.B. Warnton) und/oder visuell (z.B. Warnlampe) erfolgen. Wird auch ein Abstand des Traktors zum Objekt ermittelt, kann das Warnsignal abhängig von dem jeweils ermittelten Abstand auch in unterschiedlichen Intensitätsstufen ausgegeben werden.

Weiter bevorzugt ist das Verfahren derart ausgestaltet, dass im Falle eines als Hindernis erkannten Objektes die Fahrgeschwindigkeit des Traktors automatisch verändert wird. Beispielsweise geschieht dies über einen automatischen Eingriff in ein Motorsteuergerät oder in den Antriebstrang des Traktors. Hierdurch wird für den Fahrer eine Assistenzfunktion bereitgestellt, welche die Fahrgeschwindigkeit verlangsamt oder den Traktor anhält, um das Hindernis nicht zu überfahren.

Im Falle eines als Hindernis erkannten Objektes wird insbesondere eine Position bzw. Lage des detektierten Objektes signalisiert. Diese Signalisierung kann beispielsweise eine Information oder Darstellung in einem Bildschirm, Display, Head-Up Display oder dergleichen sein, um den Fahrer zu warnen.

In einer weiteren bevorzugten Ausführungsform wird mittels einer geeigneten Vorrichtung zur Durchführung des Verfahrens ein bereits bearbeitetes bzw. bereits überquertes Arbeitsfeld dahingehend beobachtet, ob dort ein Objekt oder ein Hindernis vorhanden ist. Dieses Arbeitsfeld ist insbesondere ein entlang der Fahrrichtung des Traktors rückwärtiges Arbeitsfeld. Hierdurch können Informationen gewonnen werden, die bei einer entsprechenden Signalisierung für den Fahrer desselben Traktors bei einem nochmaligen Überfahren desselben Arbeitsfeldes nützlich sind. Weiterhin können diese Informationen auch eine Unterstützung bei späteren Arbeitseinsätzen auf demselben Arbeitsfeld mit anderen Traktoren und/oder anderen Fahrern bieten.

Vorzugsweise wird eine Position bzw. Lage des detektierten Objektes, insbesondere eines als Hindernis erkannten Objektes, als wieder abrufbare Positionsdaten abgespeichert. Hierdurch kann eine Position bzw. Lage des detektierten Objektes auch für andere Fahrer und/oder andere Fahrzeuge bereitgestellt werden. Zu diesem Zweck können die ermittelten Positionsdaten beispielsweise in entsprechenden Datenbanksystemen abgelegt werden.

Zur Durchführung des Verfahrens wird vorzugsweise eine geeignete Vorrichtung am Traktor bereitgestellt. Diese Vorrichtung weist insbesondere mindestens eine Detektionseinheit auf, welche ein Objekt auf einem Arbeitsfeld detektiert. Die Detektionseinheit(en) weisen vorzugsweise optische Detektionsmittel (z.B. Kamera, Mono- oder Stereokamera, Lidar-Sensor, andere optische Sensoren) auf, welche ein noch zu bearbeitendes Arbeitsfeld (z.B. vor dem Traktor) oder ein bereits bearbeitetes Arbeitsfeld (z.B. hinter dem Traktor) beobachten.

Weiterhin weist die vorgenannte Vorrichtung eine Steuereinheit auf, welche Signale der mindestens einen Detektionseinheit verarbeitet. Hierzu enthält die Steuereinheit beispielsweise eine Software zur Bildverarbeitung. Diese Software kann dazu verwendet werden, zu erkennen, ob ein detektiertes Objekt innerhalb oder außerhalb eines in Querrichtung verlaufenden Fahrbereiches des Traktors und/oder des Anbaugerätes liegt.

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine schematische Seitenansicht einer Traktor-Anbaugerät-Kombination,
- Fig. 2: eine schematische Draufsicht der Traktor-AnbaugerätKombination gemäß Fig. 2,
- Fig. 3: eine schematische, blockschaltbildartige Darstellung einer Vorrichtung zur Durchführung des erfindungsgemäßen Verfahrens, und
- Fig. 4: ein Flussdiagramm mit Verfahrensschritten des erfindungsgemäßen Verfahrens.

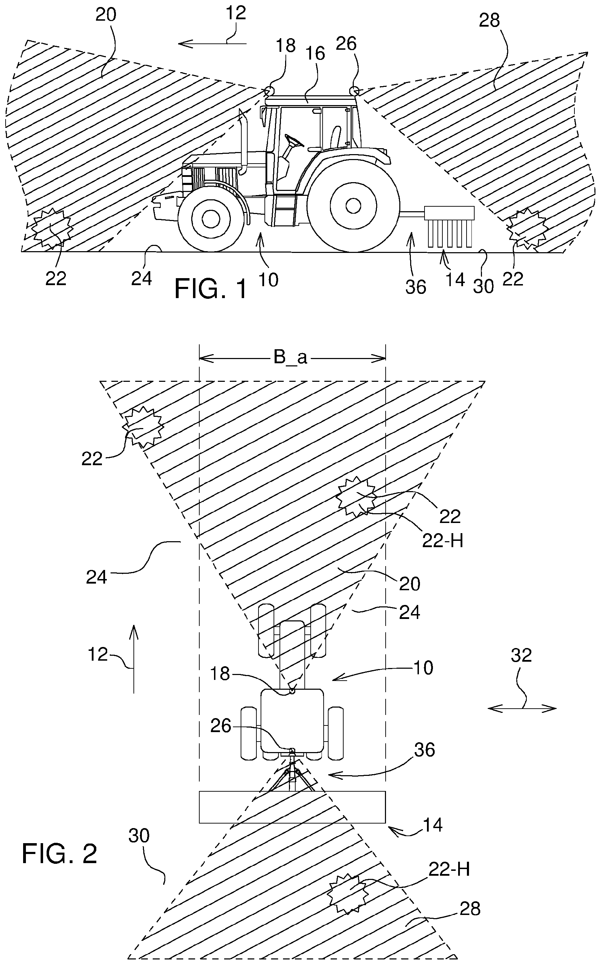

Fig. 1 zeigt einen Traktor 10 mit einem von ihm entlang einer Fahrrichtung 12 gezogenen Anbaugerät 14 (z.B. Kreiselegge, Sämaschine). In einem vorderen Bereich einer Fahrerkabine 16 des Traktors 10 ist eine erste Detektionseinheit 18 (z.B. Kamera, optischer Sensor) angeordnet. Sie detektiert innerhalb eines Detektionsbereiches 20 etwaige Objekte 22, die auf einem zu bearbeitenden Arbeitsfeld 24 liegen.

Gemäß Fig. 1 ist in einem hinteren Bereich der Fahrerkabine 16 eine zweite Detektionseinheit 26 angeordnet (z.B. Kamera, optischer Sensor), welche innerhalb eines Detektionsbereiches 28 etwaige Objekte 22 detektiert, die auf einem bereits bearbeiteten Arbeitsfeld 30 liegen.

Fig. 2 zeigt eine Arbeitsbreite B_a in einer Querrichtung 32 des Traktors 10. Die Arbeitsbreite B_a dient als ein Arbeitsparameter AP. Unter Berücksichtigung dieses Arbeitsparameters AP wird bei dem Verfahrensablauf entschieden, ob ein detektiertes Objekt 22 in dem noch zu bearbeitenden Arbeitsfeld 24 tatsächlich ein Hindernis ist.

In dem Beispiel gemäß Fig. 2 detektiert die erste Detektionseinheit 18 zwei Objekte 22 in dem zu bearbeitenden Arbeitsfeld 24. Davon liegt ein Objekt 22 innerhalb der Arbeitsbreite B_a und kann bei Vorliegen mindestens einer weiteren Voraussetzung (z.B. eine bestimmte Mindestgröße des Objektes 22) als ein Hindernis 22-H erkannt werden. Das andere Objekt 22 liegt zwar innerhalb des Arbeitsfeldes 24, jedoch außerhalb der Arbeitsbreite B_a. Es wird folglich nicht als aktuelles Hindernis eingestuft bzw. erkannt.

Die Kriterien für die Einstufung eines detektierten Objektes 22 als Hindernis 22-H können für das zu bearbeitende Arbeitsfeld 24 einerseits und das bereits bearbeitete Arbeitsfeld 30 andererseits unterschiedlich sein.

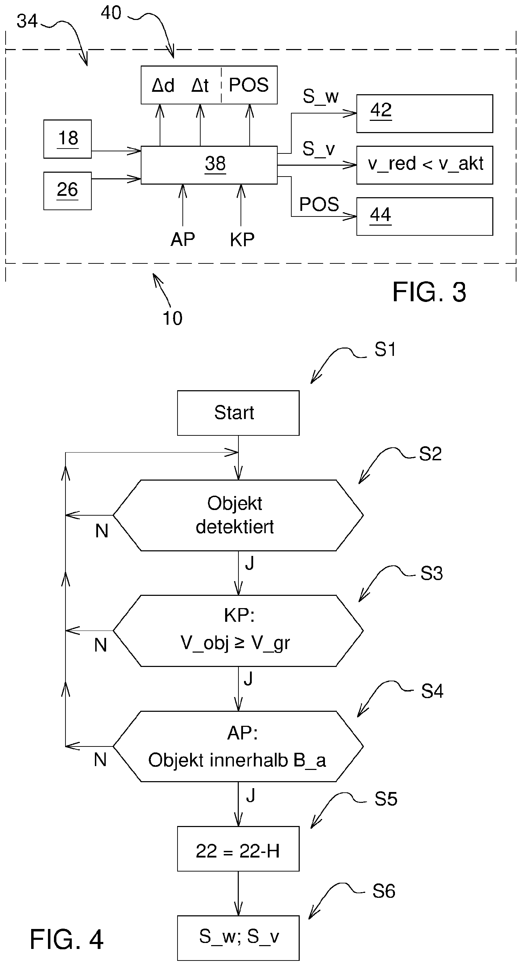

Fig. 3 zeigt eine am Traktor 10 integrierte Vorrichtung 34 zur Durchführung des Verfahrens für eine Erkennung eines Hindernisses 22-H während eines Arbeitseinsatzes der Traktor-Anbaugerät-Kombination 36. Die Vorrichtung 34 enthält die beiden vorgenannten Detektionseinheiten 18, 26 sowie eine Steuereinheit 38.

Die Steuereinheit 38 empfängt die Signale der Detektionseinheiten 18, 26 für eine Bildverarbeitung. Weiterhin erhält die Steuereinheit 38 als Eingangssignale - automatisch von einem traktorseitigen bzw. anbaugeräteseitigen Steuersystem oder manuell - die Werte eines Klassifizierungsparameters KP (z.B. eine volumenbezogene Größe) des Objektes 22 und die Werte des bereits genannten Arbeitsparameters AP.

Die Steuereinheit 38 ermittelt einen Abstand Δd zwischen dem Traktor 10 und einem detektierten Objekt 22. Unter Berücksichtigung der aktuellen Fahrgeschwindigkeit des Traktors 10 wird aus dem Abstand Δd auch eine Zeitdauer Δt ermittelt, bei deren Ablauf der Traktor 10 auf das Objekt 22 bzw. Hindernis 22-H treffen würde.

Die Werte des Abstandes Δd, der Zeitdauer Δt und Positionsdaten POS des detektierten Objektes 22 bzw. zumindest des als Hindernis 22-H erkannten Objektes 22 werden dem Fahrer des Traktors 10 an einer Anzeigeeinheit 40 in geeigneter Weise dargestellt. Die Anzeigeeinheit 40 kann auch physisch voneinander getrennte Teileinheiten aufweisen, z.B. ein separates Display-Element für die Darstellung der Positionsdaten POS.

Im Falle eines als Hindernis 22-H erkannten bzw. eingestuften Objektes 22 sendet die Steuereinheit 38 Warnsignale S_w an eine optische und/oder akustische Warneinheit 42 zur Warnung des Fahrers. Außerdem greift die Steuereinheit 38 über ausgesendete Steuersignale S_v in ein Motorsteuergerät oder den Antriebstrang des Traktors 10 derart ein, dass dessen aktuelle Fahrgeschwindigkeit v_akt auf eine niedrigere Fahrgeschwindigkeit v_red reduziert wird, insbesondere auf 0 reduziert wird. Darüber hinaus veranlasst die Steuereinheit 38 eine Abspeicherung der Positionsdaten POS in einer Speichereinheit 44. Letztere kann am Traktor 44 integriert sein oder alternativ fahrzeugfremd (z.B. in einem geeigneten Datenbanksystem) angeordnet sein. Dies ermöglicht einen technisch einfachen Zugriff auf diese abgespeicherten Daten durch berechtigte Dritte, z.B. weitere Fahrer mit eigenen Traktoren. Die abgespeicherten Positionsdaten POS können Objekte 22 des zu bearbeitenden Arbeitsfeldes 24 und/oder Objekte 22 des bereits bearbeiteten Arbeitsfeldes 30 betreffen.

Eine Variante des Verfahrensablaufes wird beispielhaft anhand von Fig. 4 erläutert. Nach einem Initialisierungsschritt S1 werden die Signale der Detektionseinheit 18 in der Steuereinheit 38 dahingehend geprüft, ob ein Objekt 22 auf dem Arbeitsfeld 24 liegt (Schritt S2). Dieser Schritt S2 wird solange durchgeführt, bis ein Objekt 22 detektiert worden ist. Daraufhin wird im Schritt 3 anhand des vorbestimmten Klassifizierungsparameters KP geprüft, ob das detektierte Volumen V_obj mindestens so groß ist wie ein vorbestimmter Volumen-Grenzwert V_gr. Alternativ kann anstatt des Volumens auch eine andere geeignete physikalische Größe für eine Größen-Klassifizierung der detektierten Objekte 22 herangezogen werden.

Stellt die Steuereinheit 38 fest, dass das detektierte Volumen V_obj kleiner ist als der vorbestimmte Volumen-Grenzwert V_gr, wird zum Schritt S2 zurückgesprungen und die Steuereinheit 38 sendet keine Steuersignale S_w, S_v aus. Wird hingegen im Schritt S3 festgestellt, dass das detektierte Volumen V_obj mindestens so groß ist wie der Volumen-Grenzwert V_gr, wird in einem weiteren Schritt 4 geprüft, ob sich das detektierte Objekt 22 innerhalb der Arbeitsbreite B_a befindet. Falls nicht, wird zum Schritt S2 zurückgesprungen und die Steuereinheit 38 sendet keine Steuersignale S_w, S_v aus. Befindet sich das Objekt 22 hingegen innerhalb der Arbeitsbreite B_a, wird dieses Objekt 22 als Hindernis 22-H erkannt (Schritt S5). Die Steuereinheit 38 veranlasst dann ein Aussenden der Steuersignale S_w und S_v (Schritt S6). Optional kann die Steuereinheit 38 zu diesem Zeitpunkt auch eine Abspeicherung der Positionsdaten POS dieses erkannten Hindernisses 22-H veranlassen. Nach Ablauf des Schrittes S6 kann der Verfahrensablauf beendet sein oder es wird automatisch zum Schritt S2 für eine Detektion weiterer Objekte 22 zurückgesprungen.

## Patentansprüche

1. Verfahren zur Erkennung eines Hindernisses (22-H) während eines Arbeitseinsatzes einer Traktor-Anbaugerät-Kombination (36), wobei ein Objekt (22) detektiert wird und ein detektiertes Objekt (22) in Abhängigkeit von einem vorbestimmten Klassifizierungsparameter (KP) für eine Klassifizierung des detektierten Objektes (22), und einem vorbestimmten Arbeitsparameter (AP) des Traktors (10) und/oder des Anbaugerätes (14) als Hindernis (22-H) erkannt wird, wobei der Klassifizierungsparameter (KP) eine Größe (V_obj) des Objektes (22) entsprechend einer oder mehrerer Größenkategorien ist, **dadurch gekennzeichnet, dass** die Größenkategorien abhängig vom spezifischen Arbeitseinsatz, Traktortyp und/oder Anbaugerätetyp als Hindernis oder Nicht-Hindernis klassifiziert werden.

2. Verfahren nach Anspruch 1, **dadurch gekennzeichnet, dass** der Arbeitsparameter (AP) eine Arbeitsbreite (B_a) in Querrichtung (32) des Traktors (10) ist.

3. Verfahren nach Anspruch 1 oder 2, **dadurch gekennzeichnet, dass** ein Abstand (Δd) zwischen dem detektierten Objekt (22) und dem Traktor (10) ermittelt wird.

4. Verfahren nach einem der vorhergehenden Ansprüche, **dadurch gekennzeichnet, dass** im Falle eines als Hindernis (22-H) erkannten Objektes (22) ein Warnsignal (S_w) gesendet wird.

5. Verfahren nach einem der vorhergehenden Ansprüche, **dadurch gekennzeichnet, dass** im Falle eines als Hindernis (22-H) erkannten Objektes (22) die Fahrgeschwindigkeit (v_akt) des Traktors (10) verändert wird.

6. Verfahren nach einem der vorhergehenden Ansprüche, **dadurch gekennzeichnet, dass** im Falle eines als Hindernis (22-H) erkannten Objektes (22) eine Position (POS) des detektierten Objektes (22) signalisiert wird.

7. Verfahren nach einem der vorhergehenden Ansprüche, **dadurch gekennzeichnet, dass** ein Objekt (22) in einem von der Traktor-Anbaugerät-Kombination (36) bereits bearbeiteten Arbeitsfeld (30), insbesondere in einem entlang der Fahrrichtung (12) des Traktors (10) rückwärtigen Arbeitsfeld (30), detektiert wird.

8. Verfahren nach einem der vorhergehenden Ansprüche, **dadurch gekennzeichnet, dass** eine Position des detektierten Objektes (22) als wieder abrufbare Positionsdaten (POS) abgespeichert wird.

## Claims

1. Method for detecting an obstacle (22-H) during a working operation of a tractor-implement combination (36), wherein an object (22) is detected and a detected object (22) is detected as an obstacle (22-H) depending on a predetermined classification parameter (KP) for classifying the detected object (22) and a predetermined working parameter (AP) of the tractor (10) and/or the implement (14), wherein the classification parameter (KP) is a size (V_obj) of the object (22) corresponding to one or more size categories, **characterized in that** the size categories are classified as an obstacle or not an obstacle depending on the specific working operation, the tractor type and/or the implement type.

2. Method according to Claim 1, **characterized in that** the working parameter (AP) is a working width (B_a) in the transverse direction (32) of the tractor (10).

3. Method according to Claim 1 or 2, **characterized in that** a distance (Δd) between the detected object (22) and the tractor (10) is determined.

4. Method according to one of the preceding claims, **characterized in that** a warning signal (S_w) is transmitted if an object (22) is detected as an obstacle (22-H).

5. Method according to one of the preceding claims, **characterized in that** the speed of travel (v_akt) of the tractor (10) is changed if an object (22) is detected as an obstacle (22-H).

6. Method according to one of the preceding claims, **characterized in that** a position (POS) of the detected object (22) is signalled if an object (22) is detected as an obstacle (22-H).

7. Method according to one of the preceding claims, **characterized in that** an object (22) is detected in a working area (30) already processed by the tractor-implement combination (36), in particular in a working area (30) that is behind the tractor (10) along the direction of travel (12).

8. Method according to one of the preceding claims, **characterized in that** a position of the detected object (22) is stored as retrievable position data (POS).

## Revendications

1. Procédé de détection d'obstacle (22-H) lors d'une opération de travail d'un ensemble tracteur-outil porté (36), un objet (22) étant détecté et un objet détecté (22) étant reconnu comme un obstacle (22-H) en fonction d'un paramètre de classification prédéterminé (KP) destiné à une classification de l'objet détecté (22), et d'un paramètre de travail prédéterminé (AP) du tracteur (10) et/ou de l'outil porté (14), le paramètre de classification (KP) étant une taille (V_obj) de l'objet (22) correspondant à une ou plusieurs catégories de taille, **caractérisé en ce que** les catégories de taille sont classées comme obstacle ou non-obstacle en fonction du travail spécifique, du type de tracteur et/ou du type d'outil.

2. Procédé selon la revendication 1, **caractérisé en ce que** le paramètre de travail (AP) est une largeur de travail (B_a) dans la direction transversale (32) du tracteur (10).

3. Procédé selon la revendication 1 ou 2, **caractérisé en ce qu'**une distance (Δd) est déterminée entre l'objet détecté (22) et le tracteur (10).

4. Procédé selon l'une des revendications précédentes, **caractérisé en ce qu'**un signal d'avertissement (S_w) est envoyé dans le cas où un objet (22) est reconnu comme obstacle (22-H).

5. Procédé selon l'une des revendications précédentes, **caractérisé en ce que** la vitesse de roulement (v_akt) du tracteur (10) est modifiée dans le cas où un objet (22) est reconnu comme obstacle (22-H).

6. Procédé selon l'une des revendications précédentes, **caractérisé en ce qu'**une position (POS) d'un objet détecté (22) est signalée dans le cas où l'objet (22) est reconnu comme obstacle (22-H).

7. Procédé selon l'une des revendications précédentes, **caractérisé en ce qu'**un objet (22) est détecté dans une zone de travail (30) déjà travaillée par l'ensemble tracteur-outil porté (36), en particulier dans une zone de travail arrière (30) suivant la direction de roulement (12) du tracteur (10) .

8. Procédé selon l'une des revendications précédentes, **caractérisé en ce qu'**une position de l'objet détecté (22) est mémorisée sous forme de données de position récupérables (POS).
